# EUROPÄISCHE PATENTSCHRIFT

(11) **EP 2 089 147 B1**
(45) Veröffentlichungstag und Bekanntmachung des Hinweises auf die Patenterteilung: **02.09.2015**
(21) Anmeldenummer: 07819428.9
(22) Anmeldetag: 30.10.2007
(51) Int. Cl.: B01J 8/00, B01J 8/06, C01B 3/38, C10G 9/20

(54) **SAMMELLEITUNG FÜR RÖHRENSPALTÖFEN**
COLLECTING LINE FOR TUBULAR REFORMERS
CONDUIT COLLECTEUR POUR FOURS TUBULAIRES FENDUS

(30) Priorität: 08.11.2006 DE 102006052937
(43) Veröffentlichungstag der Anmeldung: 19.08.2009
(73) Patentinhaber: ThyssenKrupp Industrial Solutions AG, 45143 Essen (DE)
(72) Erfinder: MEISSNER, Oliver, 45966 Gladbeck (DE); WODBERG, Silke, 58285 Gevelsberg (DE)
(74) Vertreter: Duda, Rafael Thomas
(86) Internationale Anmeldenummer: PCT/EP2007/009387
(87) Internationale Veröffentlichungsnummer: WO 2008/055605

(56) Entgegenhaltungen:
- DE-A1- 1 442 740
- DE-A1- 1 667 146
- GB-A- 1 323 074
- US-A- 3 460 924
- US-A1- 2004 037 760

## Beschreibung

Die Erfindung richtet sich auf einen Röhrenspaltofen mit Sammelleitung zur Ableitung von heißen Prozessgasen aus Röhrenspaltöfen, wie sie in Anlagen zur Reformierung von Erdgas zu Synthesegas vielfach Verwendung finden. Die Sammelleitung umfasst stets mehrere Stutzen, über welche die Prozessgasrohre des Röhrenspaltofens mit der Sammelleitung verbunden werden können. Im Bereich der Stutzen sind die Prozessgasrohre üblicherweise in Führungsrohren geführt. Gasauslässe der Führungsrohre oder Prozessgasrohre münden in die Sammelleitung und ragen in diese hinein. Im bestimmungsgemäßen Betrieb wird das Reaktionsgas über diese Gasauslässe in die Sammelleitung eingeleitet, wobei erfindungsgemäß mindestens ein Teil der Auslässe als Rohrkrümmer ausgebildet sind.

Es sind eine Vielzahl von Röhrenspaltöfen zur indirekten Erhitzung von spaltbaren Medien, insbesondere für die Spaltung von Kohlenwasserstoffen zur Gewinnung von Synthesegas und/oder Wasserstoff bekannt. In diesen Röhrenspaltöfen sind eine Vielzahl von Prozessgasrohren im Ofenraum als Register oder Bündel angeordnet, wobei diese Prozessgasrohre mit Sammelleitungen verbunden werden, welche unterhalb des Ofenbodens verlaufen. Die Patentschriften DE 1 542 530 B oder DE 10 2006 022898 zeigen derartige Röhrenspaltöfen.

Wie die DE 1 542 530 B oder DE 10 2006 022898 weiterhin zeigen, sind die Sammelleitungen selbst mehrschichtig aufgebaut und umfassen mindestens ein äußeres metallisches Tragrohr, den sogenannten Druckmantel, welches üblicherweise aus einem schweißbaren Stahlwerkstoff besteht, und ein innen liegendes Isolationsrohr, das in der Regel durch eine feuerfeste Ausmauerung oder einen feuerfesten Beton gebildet wird. In der DE 1 667 324 B ist ein dreifach geschichtetes Rohr gezeigt, wie es industriell verwendet wird. Die innerste Schicht kann ein metallisches Innenrohr sein, wie es In der DE 1 542 530 B bereits für den Durchtrittsbereich des Prozessgasrohres in die Sammelleitung vorgeschlagen wird. Dieses Innenrohr dient dem Schutz der Betonisolierung vor Erosion durch die Prozessgasströmung. Die Temperatur in der Sammelleitung beträgt cirka 800°C bis 950°C.

Die Dicke oder isolationswirkung der Isolationsschicht muss dabei derart gewählt werden, dass sie einerseits den Stahlwerkstoff des Außen- oder Tragrohres schützt, indem die Temperatur im Außen- bzw. Tragrohr auf ca. 200°C begrenzt wird, und andererseits der Beton nicht zu kalt wird. Durch die Belastung im Beton, die durch thermische Ausdehnungsprozesse hervorgerufen wird, vergrößert sich üblicherweise die Porosität im Beton, wodurch Prozessgas vom metallischen Innenrohr, welches üblicherweise nicht gasdicht ausgeführt ist, strömt. Diese kleinen Gasströmungen werden auch als Kriechströmung bezeichnet, die erhebliche Wärmemengen an das äußere Tragrohr heranführen können, wo sie zu lokalen Überhitzungen führen.

Daher ist es Aufgabe der vorliegenden Erfindung, diese Effekte in der Sammelleitung zu verhindern und eine verbesserte Sammelleitung zur Verfügung zu stellen. Die vorliegende Erfindung löst diese Aufgabe durch einen Röhrenspaltofen mit Sammelleitung zur Ableitung von heißen, in Prozessgasrohren geführten Prozessgasen aus Röhrenspaltöfen, wobei die Sammelleitung
▪ innen mindestens eine Isolationsschicht aus feuerfestem Beton oder aus feuerfester Mauerung aufweist,
▪ außen eine Wand eines metallischen Außenrohres aufweist,
▪ mehrere Stutzen umfasst, über welche die Prozessgasrohre des Röhrenofens mit der Sammelleitung verbunden sind,
▪ wobei im Bereich der Stutzen die Prozessgasrohre zumindest teilweise in Führungsrohren geführt werden,
▪ und je ein mit dem jeweiligen Prozessgasrohr verbundener Gasauslass in die Sammelleitung hineinragt, mittels welchem das Prozessgas im bestimmungsgemäßen Betrieb in die Sammelleitung eingeleitet wird,
▪ und mindestens ein Gasauslass als Rohrkrümmer ausgebildet ist.

Es hat sich überraschenderweise gezeigt, dass mittels der gekrümmten Auslässe und der daraus resultierenden Strömungsbeschleunigung und- vergleichmäßigung sowie der damit verbundenen Absenkung des Druckverlusts in der Sammelleltung die Kriechströme innerhalb der Isolationsschicht deutlich verringert werden konnten. Durch den sich einstellenden geringeren Druckverlust, der ansonsten für den Betrieb des Röhrenofens keinen Vorteil bringt, verringert sich nämlich die treibende Kraft für die Kriechströmungen angesichts der Porosität der Isolationsschicht und somit die zum Tragrohr transportierten Wärmemengen.

In Ausgestaltungen der Sammelleitung kann entweder vorgesehen werden, dass das Prozessgasrohr im Führungsrohr endet und der Gasauslass eine Verlängerung des Führungsrohres darstellt oder dass der Gasauslass eine Verlängerung des Prozessgasrohres darstellt, wobei das Führungsrohr eine im Wesentlichen zylindrische Form hat.

In weiteren Ausgestaltungen der Sammelleitung kann vorgesehen werden, dass
- sich der Querschnitt des Gasauslasses zum Ende hin verjüngt. Hierdurch werden am Gasauslass höhere Gasgeschwindigkeiten erreicht,
- die Krümmung des Gasauslasses zwischen 30° und 90° beträgt,
- der Gasauslass mit seinem äußersten Ende bis zu einer Tiefe von maximal 40 % des freien Durchmessers der Sammelleitung in diese hineinragt,
- innen in der Sammelleitung ein metallisches Innenrohr angebracht ist.

Die Sammelleitung findet Verwendung in einem Röhrenspaltofen. Hierbei kommen üblicherweise eine Vielzahl von Sammelleitungen zum Einsatz, die zusammen ein Sammelsystem bilden. Um den unterschiedlichen thermischen Einflüssen im Zentrumsbereich und an der Peripherie dieses Sammelsystems Rechnung zu tragen, können die jeweiligen Gasauslässe in den einzelnen Sammelleitungen auch unterschiedlich ausgeführt werden, also nicht sämtlich mit Rohrkrümmern ausgestattet sein oder auch unterschiedlich gestaltete Rohrkrümmer aufweisen.

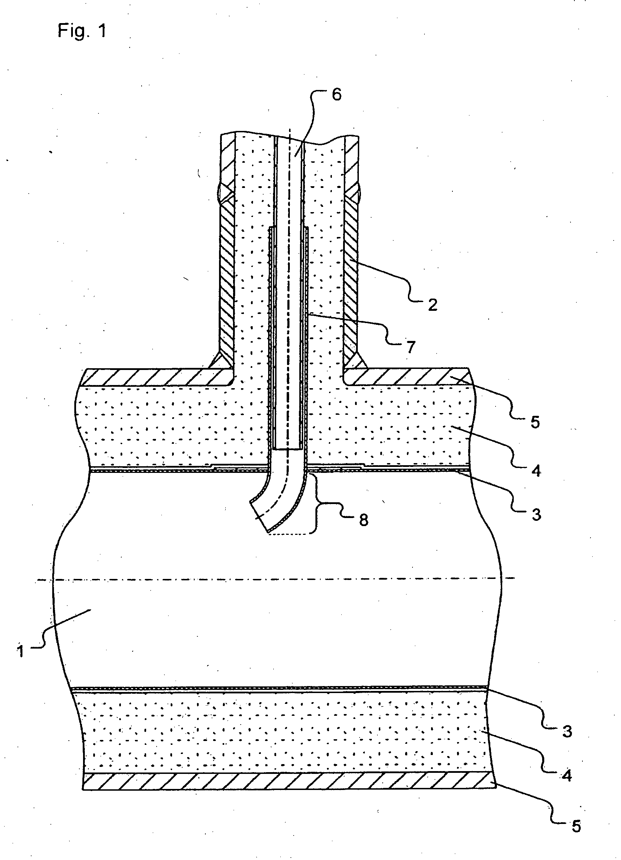

In Fig. 1 ist eine vorteilhafte Aufführungsform der vorliegenden Erfindung näher beschrieben, ohne auf die konkrete Ausführungsform beschränkt zu sein. Die Fig. 1 zeigt einen Abschnitt der erfindungsgemäßen Sammelleitung 1 und einen Stutzen 2, welche als Schnitt dargestellt sind.

Der Stutzen 2 ist oberhalb der Sammelleitung 1 angeordnet. Die Sammelleitung 1 weist drei Schichten auf, Eine erste Schicht, die durch das metallische Innenrohr 3 gebildet wird, eine Isolationsschicht 4 als zweite Schicht, die aus einem feuerfesten Beton besteht, und eine dritte äußere Schicht, die durch das Außen- oder Tragrohr 5 gebildet wird. Oberhalb der Sammelleitung 1 sind Stutzen 2 angeordnet, wobei exemplarisch nur einer dargestellt ist. Im Bereich des Stutzens 2 ist das vom nicht gezeigten Ofenraum kommende Prozessgasrohr 6 in einem Führungsrohr 7 geführt. In dem gezeigten Beispiel endet das Prozessgasrohr 6 im Bereich der Isolationsschicht 4 in dem Führungsrohr 7. Das Führungsrohr 7 ist an seinem freien Ende als Krümmer 8 ausgebildet, der mit seiner Auslassöffnung in Richtung der Hauptströmungsrichtung der Sammelleitung 1 weist.

**Bezugszeichenliste**

| | | | |
|---|---|---|---|
| 1 | Sammelleitung | 5 | Tragrohr |
| 2 | Stutzen | 6 | Prozessgasrohr |
| 3 | Innenrohr | 7 | Führungsrohr |
| 4 | Isolationsschicht | 8 | Krümmer |

## Patentansprüche

1. Röhrenspaltofen mit Sammelleitung (1) zur Ableitung von heißen, in Prozessgasrohren (6) geführten Prozessgasen aus Röhrenspaltöfen, wobei die Sammelleitung (1)
• innen mindestens eine Isolationsschicht (4) aus feuerfestem Beton oder aus feuerfester Mauerung aufweist,
• außen eine Wand eines metallischen Außenrohres (5) aufweist,
• mehrere Stutzen (2) umfasst, über welche die Prozessgasrohre (6) des Röhrenofens mit der Sammelleitung (1) verbunden sind,
• wobei im Bereich der Stutzen (2) die Prozessgasrohre (6) zumindest teilweise in Führungsrohren (7) geführt werden,
• und je ein mit dem jeweiligen Prozessgasrohr (6) verbundener Gasauslass in die Sammelleitung (1) hineinragt, mittels welchem das Prozessgas im bestimmungsgemäßen Betrieb in die Sammelleitung (1) eingeleitet wird,
dadurch gekenntzeichnet, dass
mindestens ein Gasauslass als Rohrkrümmer (8) ausgebildet ist.

2. Röhrenspaltofen mit Sammelleitung (1) nach Anspruch 1, **dadurch gekennzeichnet, dass** das Prozessgasrohr (6) im Führungsrohr (7) endet und der Gasauslass eine Verlängerung des Führungsrohres (7) darstellt.

3. Röhrenspaftofen mit Sammelleitung (1) nach Anspruch 1, **dadurch gekennzeichnet, dass** der Gasauslass eine Verlängerung des Prozessgasrohres (6) darstellt und das Führungsrohr (7) eine im Wesentlichen zylindrische Form hat.

4. Röhrenspaltofen mit Sammelleitung (1) nach einem der Ansprüche 1 bis 3, **dadurch gekennzeichnet, dass** sich der Querschnitt des Gasauslasaes zum Ende hin verjüngt.

5. Röhrenspaltofen mit Sammelleitung (1) nach einem der Ansprüche 1 bis 4, **dadurch gekennzeichnet, dass** die Krümmung des Gasauslasses zwischen 30° und 90° beträgt.

6. Röhrenspaltofen mit Sammelleitung (1) nach einem der Ansprüche 1 bis 5, **dadurch gekennzeichnet, dass** der Gasauslass mit seinem äußersten Ende bis zu einer Tiefe von maximal 40 % des freien Durchmessers der Sammelleitung (1) in diese hineinragt.

7. Röhrenspaltofen mit Sammelleitung (1) nach einem der Ansprüche 1 bis 6, **dadurch gekennzeichnet, dass** innen in der Sammelleitung (1) ein metallisches Innenrohr (3) angebracht ist.

## Claims

1. A tube cracking furnace having a header pipe (1) for discharging hot process gases conducted in process gas tubes (6) out of the tube cracking furnace, said header pipe (1)
• comprising at least one insulating layer (4) on the inside made of fireproof concrete or of fireproof masonry,
• comprising a wall of a metal exterior tube (5) on the outside,
• comprising a plurality of fittings (2) by means of which the process gas tubes (6) of the tube furnace are connected to the header pipe (1),
• the process gas tubes (6) being at least partially guided in guide tubes (7) in the region of the fittings (2),
• and one gas outlet connected to each of the process gas tubes (6) protruding into the header pipe (1), by means of which the process gas is fed into the header pipe (1) during normal operation,
**characterized in that**
at least one gas outlet is implemented as a tube manifold (8).

2. The tube cracking furnace having a header pipe (1) according to claim 1, **characterized in that** the process gas tube (6) ends in the guide tube (7) and the gas outlet is an extension of the guide tube (7).

3. The tube cracking furnace having a header pipe (1) according to claim 1, **characterized in that** the gas outlet is an extension of the process gas tube (6) and the guide tube (7) has a substantially cylindrical shape.

4. The tube cracking furnace having a header pipe (1) according to any one of the claims 1 through 3, **characterized in that** the cross section of the gas outlet tapers down toward the end.

5. The tube cracking furnace having a header pipe (1) according to any one of the claims 1 through 4, **characterized in that** the bend of the gas outlet is between 30° and 90°.

6. The tube cracking furnace having a header pipe (1) according to any one of the claims 1 through 5, **characterized in that** the outermost end of the gas outlet protrudes into the header pipe (1) to a depth of no more than 40% of the clear diameter of the header pipe (1).

7. The tube cracking furnace having a header pipe (1) according to any one of the claims 1 through 6, **characterized in that** a metal inner tube (3) is mounted in the inside of the header pipe(1).

## Revendications

1. Four tubulaire de craquage avec conduite collectrice (1) pour l'évacuation, depuis des fours tubulaires de craquage, de gaz de procédé chauds acheminés dans des tubes de gaz de procédé (6), sachant que la conduite collectrice (1)
• comporte à l'intérieur au moins une couche d'isolation (4) composée de béton réfractaire ou d'une maçonnerie réfractaire,
• comporte à l'extérieur une paroi d'un tube extérieur métallique (5),
• comporte plusieurs tubulures (2), par lesquelles les tubes de gaz de procédé (6) du four tubulaire sont reliés avec la conduite collectrice (1),
• sachant que dans la zone des tubulures (2), les tubes de gaz de procédé (6) sont posés au moins partiellement dans des tubes de guidage (7),
• et respectivement un échappement de gaz relié avec le tube de gaz de procédé respectif (6) et faisant saillie dans la conduite collectrice (1), à l'aide duquel le gaz de procédé est injecté dans la conduite collectrice (1) en fonctionnement conforme à la destination,
**caractérisé en ce qu'**
un échappement de gaz au moins se présente sous la forme d'un tube coudé (8).

2. Four tubulaire de craquage avec conduite collectrice (1) selon la revendication 1, **caractérisé en ce que** le tube de gaz de procédé (6) se termine dans le tube de guidage (7) et l'échappement de gaz représente un prolongement du tube de guidage (7).

3. Four tubulaire de craquage avec conduite collectrice (1) selon la revendication 1, **caractérisé en ce que** l'échappement de gaz représente un prolongement du tube de gaz de procédé (6) et le tube de guidage (7) présente une forme essentiellement cylindrique.

4. Four tubulaire de craquage avec conduite collectrice (1) selon l'une des revendications 1 à 3, **caractérisé en ce que** la section transversale de l'échappement de gaz se rétrécit vers l'extrémité.

5. Four tubulaire de craquage avec conduite collectrice (1) selon l'une des revendications 1 à 4, **caractérisé en ce que** la courbure de l'échappement de gaz se situe entre 30° et 90°.

6. Four tubulaire de craquage avec conduite collectrice (1) selon l'une des revendications 1 à 5, **caractérisé en ce que** l'échappement de gaz, par son extrémité, fait saillie dans la conduite collectrice (1) jusqu'à une profondeur maximale de 40 % du diamètre libre de la conduite collectrice (1).

7. Four tubulaire de craquage avec conduite collectrice (1) selon l'une des revendications 1 à 6, **caractérisé en ce qu'**un tube intérieur métallique (3) est disposé à l'intérieur, dans la conduite collectrice (1).
